# EUROPEAN PATENT SPECIFICATION

(11) **EP 1 007 420 B1**
(45) Date of publication and mention of the grant of the patent: **11.09.2002**
(21) Application number: 98902293.4
(22) Date of filing: 05.02.1998
(51) Int. Cl.: B65D 8/04, B65D 45/30, B29C 57/12

(54) **OPEN HEAD PLASTIC DRUM AND MANUFACTURING METHOD**
DECKELFASS AUS KUNSTSTOFF UND VERFAHREN ZUR HERSTELLUNG
FUT PLASTIQUE OUVERT EN HAUT ET PROCEDE DE FABRICATION

(30) Priority: 10.02.1997 NL 1005238
(43) Date of publication of application: 14.06.2000
(73) Proprietor: Koninklijke Emballage Industrie Van Leer N.V., 1182 HA Amstelveen (NL)
(72) Inventor: WENTZEL, Peter, Jurgen, Machiel, NL-2563 HG The Hague (NL); VAN KEIMPEMA, Gerrit, Jan, NL-3445 ET Woerden (NL)
(74) Representative: de Bruijn, Leendert C.
(86) International application number: NL9800071
(87) International publication number: WO98034837

(56) References cited:
- EP-A- 0 392 433
- EP-A- 0 673 841
- DE-A- 3 908 099
- DE-U- 29 612 506
- FR-A- 2 160 296
- GB-A- 1 535 287
- US-A- 3 792 893
- US-A- 3 815 777
- US-A- 4 344 546

## Description

The invention is related to an open head plastic drum which can be closed by means of a removable lid, which drum comprises a drum body and a bottom end connected thereto or formed therewith, which drum body has an upper edge onto which the lid can be sealingly connected, said upper edge comprising an outwardly curled bead flange which is a continuation of the drum body.

Such a drum is disclosed in FR-A-2160296 (figure 3). The curled bead flange thereof has an integrally moulded reinforcement ring. As a consequence, this drum cannot be manufactured from an extruded tube.

The object of the invention is to provide a drum of the type described before with an integral outwardly curled bead flange which can be obtained by extrusion.

This object is achieved in that the drum body consists of an essentially cylindrical extruded tube having an end face, the extruded diameter of the said tube being essentially equal to the nominal diameter of the drum body, and in that the bead flange is constituted by the extruded tube end region adjoining the end face and being curled over more than 270°, in such a way that said end face is near to, or touches the outer surface of the drum body.

The outwardly curled bead flange of the drum according to the invention provides the open head drum with a relatively high stiffness, which makes the drum, even without lid, retain its shape which simplifies handling and filling. Moreover, such bead flange would still provide the necessary reinforcement particularly in case the wall of the drum body is relatively thin. This has the advantage that the drum may be carried out lighter from a smaller amount of plastic material.

Furthermore, the drum body has an essentially cylindrical shape, which is favourable for ensuring a better emptyability. particularly in case of very viscous or frozen contents.

From DE-A-3908099, a traditional open head drum is known. The figures and description of said publication disclose a specific embodiment with a steel bead flange, onto which a lid is connected by means of a clamping ring.

Although DE-A-3908099 mentions that the drum may consist of plastic, no specific example of an open head plastic drum is shown. nor a plastic bead flange.

At its outer perimeter the lid preferably has a connecting groove which fits over the bead flange. Said lid may have an outer part surrounding the bead flange.

In case the outer ring part, in axial direction of the drum body. covers the bead flange only partly, the lid can be mounted and removed easily. The outer ring part can be gripped after removing the clamping ring, so as to remove the lid without great difficulty.

Furthermore, such lay-out enables a firm connecting between the lid and the drum body. The clamping ring directly rests against the bead flange, at the underside thereof. This is made possible by the relatively low outer ring part, which leaves free the lower region of the bead flange for said engagement with the clamping ring.

The lid may have a gripping groove lying inwardly and directed opposite with respect to the connecting groove, which gripping groove can be engaged by a beak of a lifting tool.

The stiffness and strength of the lid, in particular against impact loads such as occur when the drum hits the ground after toppling over, can be improved by means of a centre portion lying inwardly with respect to the gripping groove. In this respect, the lid may also have, at its inner surface, a reinforcement ring which adjoins the connecting groove, and a second reinforcement ring lying inwardly with respect to the first reinforcement ring.

The connecting groove contains a seal or gasket which can sealingly engage the bead flange. This seal or gasket may be a length of elastic material, such as EPDM sponge rubber, which is pressed into said connecting groove. Also, the seal or gasket may be formed by pouring or spraying a solidifying sealing material into the connecting groove.

The lid can be clamped onto the bead flange by means of a clamping ring which embraces the outer perimeter of the lid and the bead flange. The clamping ring embraces the outer perimeter of the lid and the bead flange. Said clamping ring preferably has a skirt portion which extends under the bead flange. This skirt portion may act as a stop for the lower beak of the lifting tool. Thus, the beak is prevented from penetrating and damaging the plastic wall of the drum body.

The invention will be explained further with reference to an embodiment of a plastic drum as shown in the figures.

Figure 1 shows a drum in cross-section along its axis.

Figure 2 shows an enlarged detail of figure 1.

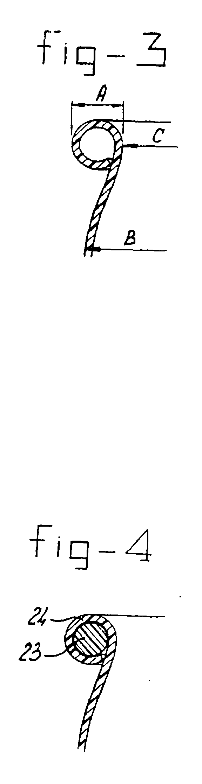

Figure 3 shows a detail of the drum bead flange region.

Figure 4 shows a second embodiment.

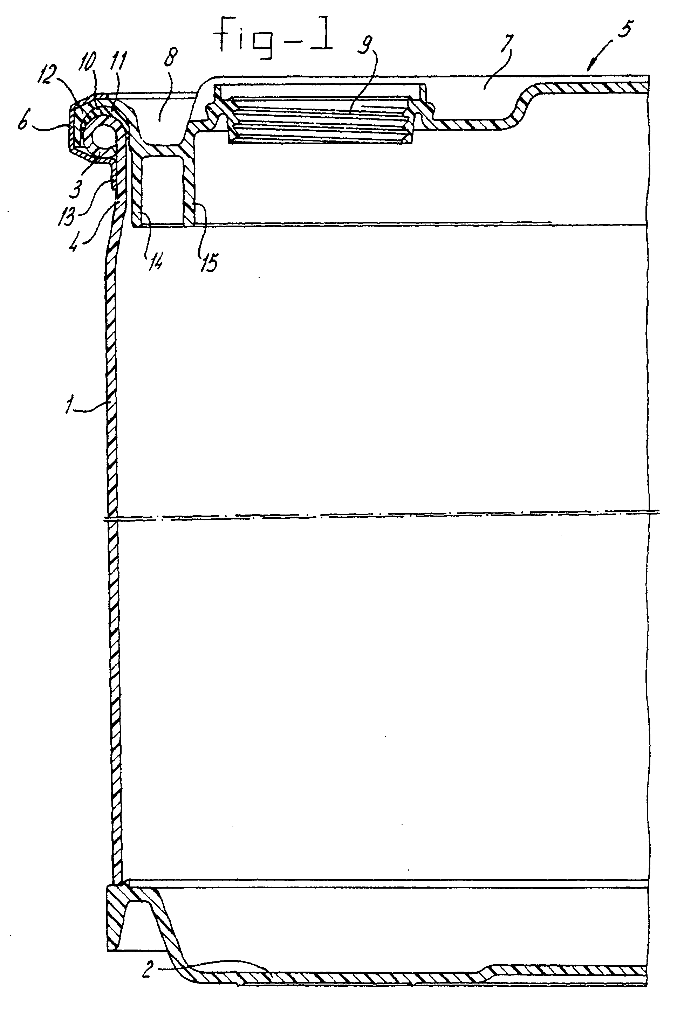

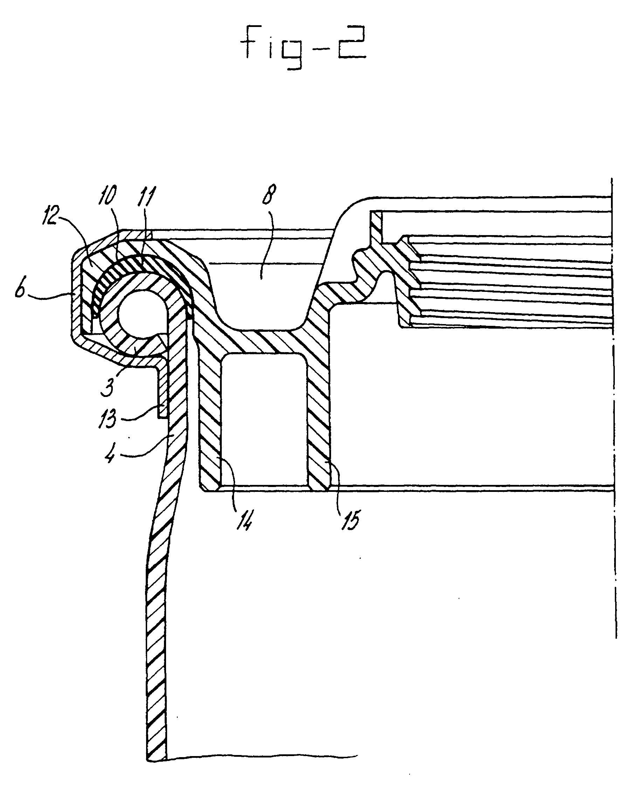

The plastic drum as shown in figures 1 and the enlarged detail of figure 2 has a drum body 1 onto which a bottom end 2 is connected, e.g. by welding or glueing. The upper edge of the drum body 1 has an outwardly curled bead flange 3, which forms a unity with the wall of the drum body 1.

The drum body 1 is almost or essentially cylindrical, but its upper region may have a somewhat narrower part 4 which however is small so as not to disturb the generally cylindrical shape. Said narrower part may result from the forming operation for obtaining the bead flange 3.

Due to this almost cylindrical shape, the drum can be easily emptied, even in case the contents are frozen or are very viscous, such as jam- or jellylike products.

The open end of the drum is closed by means of a lid 5, which is clamped onto the bead flange 3 by means of a clamping ring 6, known per se.

The lid 5 has a middle piece 7, which is surrounded by a circumferential gripping groove 8. The middle piece 7 also may have one or more bung holes 9, the closing plug being omitted for clarity. The middle piece may also be flat.

Diametrically outside with respect to the gripping groove 8, a connecting groove 10 is available which carries a sealing member 11. The connecting groove 10 with sealing member 11 can be placed on top of the bead flange 3, so as to obtain the desired tightness of the closed drum.

The clamping ring 6 has a U-shaped cross-section, which on the one hand grips over the edge part 12 which defines the connecting groove 11, and which on the other hand grips underneath the bead flange 3.

The clamping ring can be made from different materials such as metal or plastic. The clamping ring 6 can be clamped tightly onto these elements by means of a clamping device, such as a bolted connection in the ring. or a clamping lever, known per se.

Furthermore, the clamping ring has an integral, downwardly extending skirt 13, which lies against the upper part of the drum wall 1. Upon lifting the drum, the lower beak of a lifting tool is placed underneath the clamping ring and against the skirt 13, and the upper beak is situated in the gripping groove 8. Thereby, a safe gripping operation can be carried out. The lower bead flange cannot penetrate into the upper part of drum body 1. due to the fact that it rests against the (metal or plastic) skirt of the clamping ring 6.

The tightness of the closed drum should be guaranteed under extreme impact conditions, such as defined by toppling of the drum. When the drum topples or is dropped, the clamping ring 6 hits the ground, and the shock caused thereby pushes the upper part of the drum body 1. and the lid 5 inwardly. If these deformations become too large, the sealing effect of the gasket 11 may get lost. In order to provide the desired stiffness of the closed drum with respect to such impact loads, circular ribs 14 and 15 have been applied on the inner side of the lid 5. Together, the bead flange 3 on the upper part of the drum body, and these ribs 14, 15 provide a desired stiffness against forces which act on the upper end of the drum body and on the lid 5. and assist in maintaining the shape of these parts under different types of loads such that the sealing action of gasket 11 can be maintained.

Furthermore, the drum may have various embodiments. For instance, a liner could be provided on the inside. Also, other types of closures are possible, such as a large concentric closure in the centre of the dome.

By cutting off the head of a tight head drum, and subsequently forming a bead flange at the drum body edge thus obtained, a conversion from tight head to open head drum is possible.

In the embodiment of figure 4. a reinforcing ring 23 has been applied within the bead 24.

The contents of the drum can also be removed by means of a pressing plate, which is pressed into the open head top. The pressing plate has a hole to which a tube is connected for conveying the contents out of the drum upon pressing the pressing plate into the drum.

## Claims

1. Open head plastic drum which can be closed by means of a removable lid (5), which drum comprises a drum body (1) and a bottom end (2) connected thereto or formed therewith, which drum body (1) has an upper edge onto which the lid (5) can be sealingly connected, said upper edge comprising an outwardly curled bead flange (3) which is a continuation of the drum body (1), **characterised in that** the drum body (1) consists of an essentially cylindrical extruded tube having an end face, the extruded diameter of the said tube being essentially equal to the nominal diameter of the drum body, and **in that** the bead flange (3) is constituted by the extruded tube end region adjoining the end face and being curled over more than 270°, in such a way that said end face is near to, or touches the outer surface of the drum body (1).

2. Drum according to claim 1, wherein the lid (5) at its outer perimeter has a connecting groove (10) which fits over the bead flange (3).

3. Drum according to any of the preceding claims, wherein the lid (5) has an outer ring part (12) surrounding the bead flange (3).

4. Drum according to claim 3, wherein the outer ring part (12), in axial direction of the drum body, covers the bead flange (3) only partly, while the connecting groove (10) fits over said flange (3).

5. Drum according to any of the preceding claims, wherein the lid (5) has a gripping groove (8) lying inwardly and directed opposite with respect to the connecting groove (10), which gripping groove (8) can be engaged by the upper beak of a lifting tool.

6. Drum according to claim 5, wherein the lid has a dome shaped middle portion (7) lying inwardly with respect to the gripping groove (8).

7. Drum according to any of claim 2-6. wherein the lid (5) at its inner surface has a reinforcement ring (14) which adjoins the connecting groove (10).

8. Drum according to claim 7, wherein the lid (5) has a second reinforcement ring (15) lying inwardly with respect to the first reinforcement ring (14).

9. Drum according to claim 8, wherein the reinforcements rings (14, 15) are opposite the gripping groove (8).

10. Drum according to any of claims 2-9, wherein the connecting groove (10) contains a seal (11) which can sealingly engage the bead flange (3).

11. Drum according to any of claims 2-10, wherein the lid (5) can be clamped onto the bead flange by means of a clamping ring (6) which embraces the outer perimeter of the lid (5) and the bead flange (3).

12. Drum according to claim 11, wherein the clamping ring (6) surrounds the outer ring part (12) of the lid (5) and contacts the lower region of the bead flange (3).

13. Drum according to claim 11 or 12, wherein the clamping ring (6) has a skirt portion (13) which extends under the bead flange as a stop for the lower beak of the lifting tool.

14. Drum according to any of the preceding claims. wherein the lid (5) has at least one bung hole (9).

15. Drum according to any of the preceding claims, wherein a reinforcing ring (23) is situated within the bead (24).

16. Drum according to any of the preceding claims, wherein the outwardly curled bead flange (3) forms a unity with the drum body (1).

## Patentansprüche

1. Kunststofffass mit offenem Kopfteil, die mit Hilfe eines entfernbaren Deckels (5) geschlossen werden kann, wobei das Fass folgendes umfasst: einen Fasskörper (1) und ein mit ihm verbundenes oder ausgebildetes unteres Ende (2), wobei der Fasskörper (1) eine Oberkante aufweist, auf der der Deckel (5) dicht angebracht werden kann, wobei die Oberkante einen nach aussen gerollten Wulstflansch (3) aufweist, der eine Fortsetzung des Fasskörpers (1) ist, **dadurch gekennzeichnet, dass** der Fasskörper (1) aus einem im Wesentlichen zylindrisch extrudierten Rohr mit einer Stirnfläche besteht, wobei der extrudierte Durchmesser des Rohrs im Wesentlichen gleich dem Nenndurchmesser des Fasskörpers ist, und dass der Wulstflansch (3)) durch den Stirnbereich des extrudierten Rorhs neben der Stirnfläche gebildet wird und um mehr als 270° gerollt ist, so dass sich die Stirnfläche neben der Aussenfläche des Fasskörpers (1) befindet oder sie berührt.

2. Fass nach Anspruch 1, wobei der Deckel (5) an seinem äusseren Umfang eine Verbindungsnut (10) aufweist, die über den Wulstflansch (3) passt.

3. Fass nach einem der vorhergehenden Ansprüche, wobei der Deckel (5) einen den Wulstflansch (3) umgebenden äusseren Ringteil (12) aufweist.

4. Fass nach Anspruch 3, wobei der äussere Ringteil (12) in der axialen Richtung des Fasskörpers den Wulstflansch (3) nur teilweise bedeckt, während die Verbindungsnut (10) über den Flansch (3) passt.

5. Fass nach einem der vorhergehenden Ansprüche, wobei der Deckel (5) eine Griffnut (8) aufweist, die relativ zu der Verbindungsnut (10) innen und dieser direkt gegenüber liegt und von dem oberen Schnabel eines Hebewerkzeugs in Eingriff genommen werden kann.

6. Fass nach Anspruch 5, wobei der Deckel einen domförmigen Mittelteil (7) aufweist, der relativ zu der Griffnut (8) innen liegt.

7. Fass nach einem der Ansprüche 2-6, wobei der Deckel (5) an seiner Innenfläche einen Verstärkungsring (14) aufweist, der der Verbindungsnut (10) benachbart ist.

8. Fass nach Anspruch 7, wobei der Deckel (5) einen zweiten Verstärkungsring (15) aufweist, der relativ zu dem ersten Verstärkungsring (14) innen liegt.

9. Fass nach Anspruch 8, wobei die Verstärkungsringe (14, 15) der Crriffnut (8) gegenüberliegen.

10. Fass nach einem der Ansprüche 2-9, wobei die Verbindungsnut (10) eine Dichtung (11) enthält, die den Wulstflansch (3) dichtend in Eingriff nehmen kann.

11. Fass nach einem der Ansprüche 2-10, wobei der Deckel (5) mit Hilfe eines Klemmrings (6), der den äusseren Umfang des Deckels (5) und den Wulstflansch (3) umgreift, auf den Wulstflansch geklemmt werden kann.

12. Fass nach Anspruch 11, wobei der Klemmring (6) den äusseren Ringteil (12) des Deckels (5) umgibt und das untere Gebiet des Wulstflansches (3) berührt.

13. Fass nach Anspruch 11 oder 12, wobei der Klemmring (6) ein Randteil (13) aufweist, der sich als Anschlag für den unteren Schnabel des Hebewerkzeugs unter dem Wulstflansch erstreckt.

14. Fass nach einem der vorhergehenden Ansprüche, wobei der Deckel (5) mindestens ein Spundloch (9) aufweist.

15. Fass nach einem der vorhergehenden Ansprüche, wobei sich inerhalb des Wulstes (24) ein Verstärkungsring (23) befindet.

16. Fass nach einem der vorhergehenden Ansprüche, wobei der nach aussen gerollte Wulstflansch (3) mit dem Fasskörper (1) eine Einheit bildet.

## Revendications

1. Fût plastique ouvert en haut qui peut être fermé au moyen d'un couvercle amovible (5), lequel fût comprenant un corps de fût (1) et un fond (2) connecté ou formé avec celui-ci, lequel corps de fût (I) a une arête supérieure sur laquelle le couvercle (5) peut être connecté de manière étanche, ladite arête supérieure comprenant un rebord en bourrelet (3) recourbé vers l'extérieur qui est une continuation du corps du fût (1), **caractérisé en ce que** le corps du fût (1) consiste en un tube extrudé cylindrique par essence comportant une face terminale, le diamètre extrudé dudit tube étant globalement égal au diamètre nominal du corps du fût, et **en ce que** le rebord en bourrelet (3) est constitué de la partie terminale du tube extrudé jouxtant la face terminale et étant recourbée sur plus de 270°, de manière à ce que ladite face terminale avoisine ou touche la surface extérieure du corps du fût (1).

2. Fût selon la revendication 1, le couvercle (5) ayant sur son périmètre extérieur une rainure de connexion (10) qui s'ajuste sur le rebord en bourrelet (3).

3. Fût selon une des revendications précédentes, le couvercle (5) ayant une partie circulaire extérieure (12) entourant le rebord en bourrelet (3).

4. Fût selon la revendication 3, la partie circulaire extérieure (12) couvrant le rebord en bourrelet (3) seulement en partie dans le sens axial du corps du fût, tandis que la rainure de connexion (10) s'ajuste sur ledit rebord (3).

5. Fût selon une des revendications précédentes, le couvercle (5) ayant une rainure de prise (8) située à l'intérieur et orientée à l'opposé par rapport à la rainure de connexion (10), laquelle rainure de prise (8) pouvant être saisie par le bec supérieur d'un outil de levage.

6. Fût selon la revendication 5, le couvercle ayant une portion centrale (7) en forme de dôme située à l'intérieur par rapport à la rainure de prise (8).

7. Fût selon une des revendications 2 à 6, le couvercle (5) ayant sur sa surface interne une bague de renfort (14) qui jouxte la rainure de prise (10).

8. Fût selon la revendication 7, le couvercle (5) ayant une seconde bague de renfort (15) située à l'intérieur par rapport à la première bague de renfort (14).

9. Fût selon la revendication 10, les bagues de renfort (14, 15) étant opposées à la rainure de renfort (8).

10. Fût selon une des revendications 2 à 9, la rainure de connexion (10) contenant un joint (11) qui peut s'insérer de manière étanche dans le rebord en bourrelet (3).

11. Fût selon une des revendications 2 à 10, le couvercle (5), pouvant être enclenché sur le rebord en bourrelet au moyen d'une bague d'enclenchement (6) qui encercle le périmètre extérieur du couvercle (5) et le rebord en bourrelet (3).

12. Fût selon la revendication 11, la bague d'enclenchement (6) entourant la partie circulaire extérieure (12) du couvercle (5) et étant en contact avec la partie inférieure du rebord en bourrelet (3).

13. Fût selon la revendication 11 ou 12, la bague d'enclenchement (6) ayant une portion en jupe (13) qui s'étend sous le rebord en bourrelet et servant d'arrêt pour le bec inférieur de l'outil de levage.

14. Fût selon une des revendications précédentes, le couvercle (5) ayant au moins un trou de bonde (9).

15. Fût selon une des revendications précédentes, une bague de renfort (23) étant située dans le bourrelet (24).

16. Fût selon une des revendications précédentes, le rebord en bourrelet recourbé vers l'extérieur (3) formant une unité avec le corps du fût (1).
